# EUROPÄISCHE PATENTSCHRIFT

(11) **EP 1 037 896 B1**
(45) Veröffentlichungstag und Bekanntmachung des Hinweises auf die Patenterteilung: **31.07.2002**
(21) Anmeldenummer: 99950566.2
(22) Anmeldetag: 29.09.1999
(51) Int. Cl.: C07F 9/535, C25B 3/08

(54) **ELEKTROCHEMISCHE SYNTHESE VON PERFLUORALKYLFLUOROPHOSPHORANEN**
ELECTROCHEMICAL SYNTHESIS OF PERFLUOROALKYLFLUOROPHOSPHORANES
SYNTHESE ELECTROCHIMIQUE DE PERFLUORALKYL-FLUOROPHOSPHORANES

(30) Priorität: 09.10.1998 DE 19846636
(43) Veröffentlichungstag der Anmeldung: 27.09.2000
(73) Patentinhaber: MERCK PATENT GmbH, 64293 Darmstadt (DE)
(72) Erfinder: HEIDER, Udo, D-64560 Crumstadt (DE); HILARIUS, Volker, D-64823 Gross-Umstadt (DE); SARTORI, Peter, D-86919 Utting (DE); IGNATIEV, Nikolai, D-47058 Duisburg (DE)
(86) Internationale Anmeldenummer: EP9907214
(87) Internationale Veröffentlichungsnummer: WO0021969

(56) Entgegenhaltungen:
- WO-A-98/15562
- DE-A- 2 620 086
- YAGUPOL' SKII L.M.: "Electrochemical fluorination of trialkylphosphine oxides" JOURNAL OF GENERAL CHEMISTRY USSR., Bd. 54, Nr. 1, - 20. September 1984 (1984-09-20) Seiten 692-695, XP002125736 CONSULTANTS BUREAU. NEW YORK., US
- KAMPA J.J.: "The synthesis of tris(perfluoroalkyl) phosphanes" ANGEWANDTE CHEMIE. INTERNATIONAL EDITION., Bd. 34, Nr. 11, - 16. Mai 1995 (1995-05-16) Seiten 1241-1244, XP002125737 VERLAG CHEMIE. WEINHEIM., DE ISSN: 0570-0833 in der Anmeldung erwähnt

## Beschreibung

Die Erfindung betrifft ein Verfahren zur Herstellung von Perfluoralkylfluorophosphoranen der allgemeinen Formel

(CₙF₂ₙ₊ₘ)_{y}PF_{5-y} (I)

worin
- n: 1, 2, 3, 4, 5, 6, 7 oder 8,
- m: +1 oder-1 und
- y: 1, 2 oder 3
bedeuten, wobei die Liganden (CₙF₂ₙ₊ₘ) gleich oder unterschiedlich sein können, sowie deren Verwendung als Elektrolyte, Vorprodukte für Leitsalze und deren Anwendung in Lithiumbatterien.

Perfluoralkylfluorophosphorane sind als Ausgangsmaterialien für die Synthese von verschiedenen Organofluorphosphor-Verbindungen, von weitgespanntem Interesse (N. V. Pavlenko et. al.; Zh. Obshch. Khim. (Russ.) 1989, Vol. 59, 534-537).

Perfluoralkylfluorophosphorane können auf verschiedene Weise synthetisiert werden, z.B. ausgehend von elementarem Phosphor und Perfluoralkyliodiden (F.W. Bennett et. al.; J. Chem. Soc. 1953, 1565-1571). Normalerweise führt diese Reaktion zunächst zur Bildung einer komplexen Mischung von Mono-, Bis-, und Trisperfluoralkylphosphanen, die anschließend durch Chlorierungs- und Fluorierungsprozesse in die korrespondierenden Phosphorane übergeführt werden können (M. Görg et.al.; J. Fluorine Chem. 1996, Vol. 79,103-104). Durch die Nebenreaktionen werden viele Nebenprodukte erzeugt, deren Abtrennung und Entsorgung problematisch ist. Nachteil dieses Syntheseweges ist u.a. die Umsetzung in Anwesenheit von Hg, das auch in den Folgeprodukten noch nachweisbar ist. Nach diesem Verfahren hergestellte Produkte sind für den Einsatz in Batterien ungeeignet. Zudem können nur kleine Chargen im Labormaßstab hergestellt werden.

Eine neuere Methode (J. J. Kampa et. al.; Angew. Chem. 1995, Vol. 107, 1334-1337) zur Synthese von Trisperfluoralkyldifluorphosphoranen ist die Umsetzung von elementarem Fluor mit den korrespondierenden Alkylphosphanen. Die Nachteile dieser Methode sind eine komplizierte Arbeitstechnik und sehr teure Ausgangsmaterialien. Die für das Verfahren benötigten fluorierten Lösungsmittel sind teuer in der Herstellung, müssen unter besonderen Sicherheitsvorkehrungen verwendet werden und ihre Entsorgung nach der Verwendung ist teuer.

Die günstigste bisher bekannte Methode ist die in DE 26 20 086 und von Yakupol'skii (Journ. of Gener.Chem. USSR, 1984, 692-695) beschriebene elektrochemische Fluorierung von Trialkylphosphinoxiden mit Hilfe der elektrochemischen Fluorierung nach Simons. Die Nachteile des Verfahrens sind, daß lediglich Trisperfluoralkylphosphorane dargestellt werden können, daß die Ausbeuten mit 40-50% niedrig sind, welche mit steigender Kettenlänge des Alkylrestes noch mehr abnehmen. Ein weiterer Nachteil ist die unvermeidbar parallel laufende Bildung von toxischen und explosionsfähigen Koppelprodukten, z.B. Sauerstoffdifluorid.

Die bisher bekannten Methoden zur Gewinnung von Perfluoralkylphosphoranen durch elektrochemische Fluorierung erfordern, daß die der Elektrofluorierung unterworfenen Edukte durch die Anwesenheit von stark elektronegativen Substituenten wie Fluor oder Chlor oder von Sauerstoff gegen das Arbeitsmedium stabilisiert sein müssen (DE 19641138 und WO 98/15562). Eine solche Annahme wird in der Literatur (Journal of Fluorine Chemistry 75, 1995, 157-161) bestätigt.

Aufgabe der vorliegenden Erfindung ist es deshalb, ein preiswertes, einfach durchführbares Verfahren zur Verfügung zu stellen, durch das Perfluoralkylfluorophosphorane in verbesserten Ausbeuten und hohen Reinheiten erhalten werden, so daß die hergestellten Produkte für die Anwendung in Batterieelektrolyten geeignet sind. Aufgabe der Erfindung ist es auch ein Verfahren zur Verfügung zu stellen, durch das die Bildung toxischer und explosionsfähiger Nebenprodukte vermieden wird.

Die erfindungsgemäße Aufgabe wird gelöst durch die elektrochemische Fluorierung von Alkylphosphanen der allgemeinen Formel (II) mit gleichen oder unterschiedlichen Alkylsubstituenten am Phosphor. Dies ermöglicht die Synthese von cyclischen, linearen und verzweigten Perfluoralkylphosphoranen der allgemeinen Formel (I) aus Verbindungen der allgemeinen Formel (II) nach folgendem Reaktionsschema in hohen Ausbeuten. 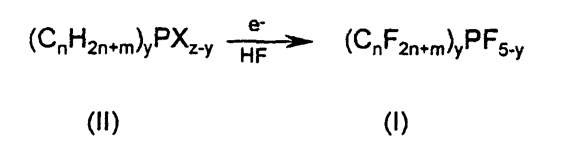 worin
- n: 1,2,3,4,5,6,7 oder 8,
- m: +1 oder -1,
- x: H,
- y: 1, 2 oder 3 und
- z: 3,
bedeuten. Aus der Gruppe der Alkyle werden cyclische, lineare oder verzweigte Methyl-, Ethyl-, Propyl-, Butyl-, Pentyl-, Hexyl-, Heptyl- und Oktylliganden verwendet.

Gegenstand der Erfindung ist daher ein Verfahren zur Darstellung von Perfluoralkylfluorophosphoranen über eine elektrochemische Synthese.

Die erfindungsgemäß eingesetzten Ausgangssubstanzen aus den Gruppen der Alkylphosphane bilden in wasserfreiem Fluorwasserstoff die korrespondierenden Phosphoniumsalze, welche in Fluorwasserstoff eine sehr gute Löslichkeit besitzen.

Vorteilhafterweise können Lösungen mit Phosphankonzentrationen von 30-60 % im Gegensatz zu den reinen Alkylphosphanen nicht brennen und können daher als gut handhabbare Einsatzmaterialien verwendet werden. Die Ausgangsmaterialien werden in wasserfreiem Fluorwasserstoff umgesetzt.

Es wurde gefunden, daß bei der erfindungsgemäßen elektrochemischen Fluorierung von Alkylphosphanen keine explosiven Substanzen gebildet werden.

Die hauptsächlichen Nebenprodukte der erfindungsmäßigen elektrochemischen Fluorierung sind Phosphorpentafluorid und Fluoroalkane, die ihrerseits praktische Verwendung als ozonunschädliches Treibgas, Lösungsmittel oder Synthesebaustein finden können.

Gegenüber den bisherigen Annahmen hat sich gezeigt, daß gerade die unsubstituierten Trialkylphosphane mit Kettenlängen von C≥2 besonders gut geeignete Edukte für elektrochemische Perfluorierungsreaktionen darstellen. Ihre Stabilität ist wider Erwarten sehr hoch. Während Trimethylphosphan durch die elektrochemische Fluorierung weitgehend abgebaut wird, was wohl auf die Abspaltung von Difluorcarben etc. zurückzuführen ist, wird schon Triethylphosphan mit sehr guten Ausbeuten in Trisperfluorethyldifluorphosphoran übergeführt.

Zur Herstellung der erfindungsgemäßen Verbindungen wird eine Elektrolysezelle verwendet, die z.B. aus einem zylindrischen Doppelwandgefäß besteht, deren Material gegen die vorherrschenden Reaktionsbedingungen stabil ist wie z.B. Edelstahl. Die Elektrolysezelle enthält ein Elektrodenpaket mit alternierenden Nickelanoden und Kathoden aus HF-beständigen Materialien mit einer jeweiligen effektiven Oberfläche von z.B. 4,58 dm² für Nickelanoden und -kathoden. Die Elektrolysezelle ist mit einem handelsüblichen Amperemeter, zur Ermittlung des Stromverbrauchs während der Reaktion, versehen. Zur Durchführung des Verfahrens wird die Zelle auf Temperaturen zwischen -15°C und 19°C gekühlt, bei erhöhtem Druck kann bis 40°C gearbeitet werden. Die Versuchsergebnisse haben gezeigt, daß gute Ergebnisse zwischen -10°C und 10°C erzielt werden. Vorzugsweise wird jedoch bei einer Temperatur von 0°C gearbeitet, da diese Temperatur auf besonders einfache Weise, wie z.B. durch Eiswasserkühlung gehalten werden kann. Die Zelle wird mit einem Rückflußkühler versehen, um gasförmige Reaktionsprodukte auszukondensieren. Der Gasauslaß wird auf Temperaturen zwischen -10°C und -35°C gekühlt. Bevorzugt erfolgt eine Kühlung auf -15°C bis -33°C. Durch den Einsatz von Ethanol als Kühlmedium wird besonders bevorzugt bei -30°C gearbeitet.

Es wird eine entsprechende Menge flüssiger Fluorwasserstoff, je nach Feuchtigkeitsgehalt, zwischen 2 und 100 Stunden vorelektrolysiert. In der Regel sind 48 Stunden ausreichend. Die Edukte werden chargenweise als 10 bis 70%-ige Lösungen in HF eingesetzt, da diese nicht brennbar sind. Die Versuche haben gezeigt, daß die besten Ergebnisse mit 30 bis 45%-igen Lösungen erzielt werden. Die flüssigen Reaktionsprodukte werden am Zellenboden gesammelt. Gasförmige Produkte werden über den Rückflußkühler abgeleitet und mit Hilfe von 2 aufeinanderfolgenden Kühlfallen, die auf -50 bis -100°C gekühlt werden auskondensiert Bevorzugt wird in einem Temperaturbereich zwischen -60°C und -85°C gearbeitet, da hier die Mehrzahl der gasförmigen Produkte auskondensiert. Durch die problemlose Kühlung mittels Trockeneis wird ganz besonders bevorzugt bei -78°C gearbeitet. Das Verfahren wird bei einem Druck zwischen 1 bar und 3 bar durchgeführt. Arbeiten bei höherem Druck erfordern eine speziell für diesen Druck ausgelegte Peripherie, die erhebliche Kosten verursacht. Aus wirtschaftlichen Gründen wird bevorzugt bei leichtem Überdruck zwischen 1 bar und 0,5 bar gearbeitet. Besonders bevorzugt wird die Umsetzung unter Normaldruck (1 bar) durchgeführt. Die Elektrolyse erfolgt bei einer Zellspannung zwischen 4,0 und 6,5 V. Die Reaktion wird bei einer Stromdichte zwischen 0,1 und 3,5 A/dm² durchgeführt. In der Regel ist eine Stromdichte zwischen 0,2 und 0,6 A/dm² ausreichend. Gute Ergebnisse werden bei einer Stromdichte von 0,22 bis 0,55 A/dm² erzielt. Um einen nahezu vollständigen Umsatz der Edukte zu erreichen wird die Elektrolyse nach einem Durchsatz von 80 bis 200% der theoretischen Strommenge beendet. Einen guten Umsatz erzielt man bei einem Durchsatz von 90 bis 170% der theoretischen Menge. In den Versuchen hat sich ein Durchsatz von 95 bis 150% als besonders geeignet herausgestellt. Das flüssige Reaktionsprodukt wird periodisch abgezogen und das abgezogene Volumen durch die Zugabe von Fluorwasserstoff mit neuem Edukt ersetzt. Die Gesamtausbeute ergibt sich aus der Menge Reaktionsprodukt aus dem Reaktionsgefäß und dem aus den Kühlfallen isolierten Reaktionsprodukt.

Die erhaltenen Reaktionsprodukte können sofort, oder nach einer Aufreinigung mittels Destillation, mit Lithiumfluorid in das korrespondierende Phosphat übergeführt werden.

Das preiswerte und mit einfachen Mitteln und Apparaturen durchführbare Verfahren liefert Produkte in einer Qualität, die für den Einsatz in Batterien geeignet sind, in guten Ausbeuten. Bei diesem Verfahren werden keine explosionsfähigen oder toxischen Nebenprodukte gebildet. Die nicht ozonabbauenden Nebenprodukte können als FCKW-Ersatzstoffe für Treibgase verwendet werden.

Die nachfolgenden Beispiele sollen die Erfindung näher erläutern, ohne sie jedoch zu beschränken.

### Beispiele

### Beispiel 1

### Tris(pentafluoroethyl)difluorophosphoran(III)

Die Verbindung Tris(pentafluoroethyl)difluorophosphoran wurde durch elektrochemische Fluorierung von Triethylphosphan dargestellt. Als Elektrolysezelle diente ein zylindrisches Doppelwandgefäß aus Edelstahl mit einem Gesamtvolumen von 360 cm³. Die Elektrolysezelle ist mit einem Elektrodenpaket von alternierenden Nickelanoden und Nickelkathoden mit einer jeweiligen effektiven Oberfläche von 4,58 dm². Die Zelle wurde auf 0°C gekühlt und hatte einen Rückflußkühler mit Gasauslaß bei -30°C.

In der Zelle wurden zunächst 310 g flüssiger Fluorwasserstoff 48 Stunden vorelektrolysiert und dann insgesamt 158,2 g einer 36%-igen Triethylphosphan-Lösung in Fluorwasserstoff in 5 Portionen, wie in der folgenden Tabelle dargestellt, zugefügt

| Menge Triethylphosphan-Lösung [g] | Elektrolysedauer [Ah] |
|---|---|
| 27,8 | 0 |
| 30,4 | 81,8 |
| 31,9 | 168,0 |
| 31,1 | 256,4 |
| 37,0 | 371,3 |

Gasförmige Produkte wurden über den Rückflußkühler abgeleitet und durch 2 auf-78°C gekühlte Fallen aus Fluorpolymeren geleitet. Die Elektrolyse erfolgte bei einer Zellspannung von 4,0-5,1 Volt und einer Stromdichte von 0,44-0,55 A/dm2 und wurde nach Durchsatz von 517 Ah (133,8% der theoretisch notwendigen Menge) beendet. Von der eingesetzten Elektrizitätsmenge wurden etwa 7% zur Trocknung des Fluorwasserstoffs verwendet. Das flüssige Reaktionsprodukt, das sich am Zellenboden sammelt, wurde periodisch abgezogen und das ausgetragene Volumen durch Zusatz von 131 g Fluorwasserstoff ersetzt. Insgesamt wurden 146,1 g einer klaren Flüssigkeit isoliert, die nach Ausweis der ¹⁹F- und ³¹P-NMR-Spektren praktisch reines Tris(pentafluorethyl)difluorophosphoran darstellten. Hinzu kamen weitere 5 g dieser Verbindung, die sich aus den auf-78°C gekühlten Fallen isolieren ließen.

Die Gesamtausbeute an Tris(pentafluorethyl)difluorophosphoran betrug somit 73,5%.

NMR ³¹P-spektroskopische Daten entsprechen denen in der Literatur (V.J. Semenii et. Al.; Zh. Obshch. Khim. (Russ.) 1985, Vol. 55, 12, 2716-2720): 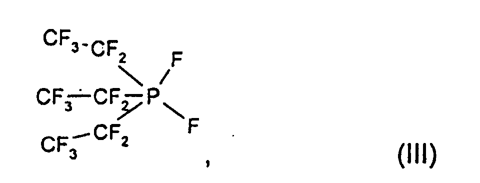 NMR ³¹P,ppm: (CD₃COCD₃-Film mit 85%-ige H₃PO₄ als Standard),
-47,95 tsep
J¹_{P,F} = 1003 Hz
J²_{P,F} = 122 Hz

NMR¹⁹F, ppm: (CD₃COCD₃-Film mit CCl₃F als Standard),
-49,76 dm (2F, PF₂)
-82,27 t (9F, 3CF₃)
-113,81 dt (6F, 3CF₂)
J¹_{P,F}=1003 Hz
J²_{P,F}=122 Hz
J³_{F,F}=12,5 Hz
J⁴_{F,F}=9,5 Hz

### Beispiel 2

### Tris(nonafluorobutyl)difluorophosphoran(IV)

Tris(nonafluorobutyl)difluorophosphoran wurde durch elektrochemische Fluorierung von Tributylphosphin dargestellt. In diesem Fall hatte die Elektrolysezelle ein Volumen von 1,5 Liter und effektive Anoden- und Kathodenflächen von je 15,6 dm². Die Zelltemperatur betrug 0°C, die Temperatur des Rückflußkühlers -20°C.

1125 g flüssiger Fluorwasserstoff wurde über 100 Stunden in der Zelle vorelektrolysiert und anschließend 268,0 g Tributylphosphin in 34,8 bzw. 43,6%-iger Lösung in Fluorwasserstoff in 7 Portionen, wie in der folgenden Tabelle aufgelistet, zugegeben.

| Menge Tributylphosphin [g] | Elektrolysedauer [Ah] |
|---|---|
| 41,8 | 0 |
| 38,0 | 291,3 |
| 38,0 | 623,8 |
| 35,1 | 930,6 |
| 41,8 | 1430,0 |
| 35,8 | 1939,0 |
| 37,5 | 2414,9 |

Die Elektrolysespannung betrug 4,5-5,2 V (Zellspannung), die Stromdichte 0,32 A/dm² mit einem Gesamteinsatz von 2918,4 Ah (146,5% der Theorie). Von der gesamten Strommenge entfielen etwa 10% auf die Trocknung des Elektrolyten. Die flüssigen Elektrolyseprodukte, die sich aus der Fluorwasserstoff-Lösung abscheiden, wurden fallweise von Zellenboden abgezogen und das Volumen durch Zugabe von zusätzlichem Fluorwasserstoff (Gesamtmenge 1164 g) konstant gehalten. Insgesamt wurden 470 g klarer Flüssigkeit als Elektrolyseprodukt erhalten, die nach den ¹⁹F - und ³¹P-Spektren praktisch reines Tris(nonafluorbutyl)difluorphosphoran waren. Das entspricht einer Ausbeute von 48,8%.

Die NMR-Daten entsprechen den literaturbekannten Daten für Tris(nonafluorobutyl)difluorophosphoran.

NMR ³¹P,ppm: (CD₃COCD₃-film mit 85%-ige H₃PO₄ als Standard),
-43,50 tsep
J¹_{P,F} = 1049,8 Hz
J²_{P,F} = 125 Hz

NMR ¹⁹F, ppm: (CD₃COCD₃-Film mit CCl₃F als Standard),
-46,97 dm (2F, PF₂)
-83,36 m (9F, 3CF₃)
-109,43 dm (6F, 3CF₂)
-121,88 m (6F, 3CF₂)
-127,61 m (6F, 3CF₂)
J¹_{P,F}=1049 Hz
J²_{P,F}=124,7 Hz

### Beispiel 3

### Tris(heptafluoropropyl)difluorophosphoran (VI).

Die Verbindung Tris(heptafluoropropyl)difluorophosphoran wurde durch elektrochemische Fluorierung von Tripropylphosphan dargestellt. Als Elektrolyzelle diente ein zylindrisches Doppelwandgefäß aus Edelstahl mit einem Gesamtvolumen von 310 cm³. Die Elektrolysezelle ist mit einem Elektrodenpaket von alternierenden Nickelanoden und Nickelkathoden, mit einer jeweiligen effektiven Oberfläche von 3,75 dm², ausgestattet. Die Zelle wurde auf 0°C gekühlt und hatte einen Rückflußkühler mit Gasauslaß bei -25°C.

In der Zelle wurde zunächst 230 g flüssiger Fluorwasserstoff 50 Stunden vorelektrolysiert und dann insgesamt 133,0 g einer 37,6%igen Tripropylphosphan-Lösung in Fluorwasserstoff in 4 Portionen, wie in der folgenden Tabelle dargestellt, zugefügt

| Menge Tripropylphosphan-Lösung [g] | Elektrolysedauer [Ah] |
|---|---|
| 33,0 | 0 |
| 31,0 | 91,8 |
| 32,0 | 189,8 |
| 37,0 | 282,3 |

Die Elektrolyse erfolgte bei einer Zellspannung von 4,0 - 5,1 Volt und einer Stromdichte von 0,37-0,53 A/dm² und wurde nach Durchsatz von 476,3 Ah (129,4 % der theoretisch notwendigen Menge) beendet. Von der eingesetzten Elektrizitätsmenge wurden etwa 5% zur Trocknung des Fluorwasserstoffes verwendet. Das flüssige Reaktionsprodukt, das sich am Zellboden sammelt, wurde periodisch abgezogen und das ausgetragene Volumen durch Zusatz von 135 g Fluorwasserstoff ersetzt. Insgesamt wurden 95,6 g einer klaren Flüssigkeit isoliert, die den ¹⁹F- und ³¹P-NMR-Spektren zufolge praktisch reines Tris(heptafluoropropyl)difluorophosphoran dargestellt. Die Ausbeute an Tris(heptafluoropropyl)difluorophosphoran betrug 53,2%. Die ¹⁹F- und ³¹P-NMR spektroskopischen Daten entsprechen denen in der Literatur (V.J. Semenii et. Al.; Zh. Obshch. Khim. (Russ.) 1985, Vol. 55, 12, 2716-2720): 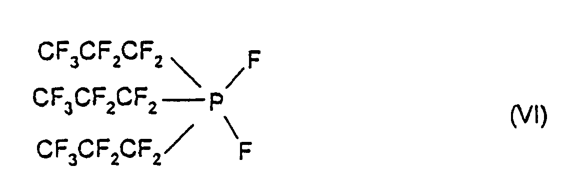 ³¹P-NMR, ppm: (CD³COCD₃-Film mit 85 %ige H₃PO₄ als Standard),
-43,89 tsep.
J¹_{P,F} = 1041 Hz
J²_{P,F} = 123,9 Hz
¹⁹F-NMR, ppm: (CD₃COCD₃-Film mit CCl₃F als Standard),
-47,42 dm (2F, PF₂)
-82,49 m (9F, 3CF₃)
-110,40 dm (6F, 3CF₂)
-125,77 s (6F, 3CF₂)
J¹_{P,F} = 1040 Hz
J²_{P,F} = 124,6 Hz
J³_{F,F} = 14,0 Hz

### Beispiel 4

### Tris(nonafluoro-iso-butyl)difluorophosphoran (VII).

Die Verbindung Tris(nonafluoro-iso-butyl)difluorophosphoran wurde durch elektrochemische Fluorierung von Tris(iso-butyl)phosphan dargestellt. In diesem Fall hatte die Elektrolysezelle ein Volumen von 1,5 Liter und effektive Anoden- und Kathodenflächen von je 15,6 dm².

Die Zelle wurde auf 0°C gefkühlt und hatte einen Rückflußkühler mit Gasauslaß bei -20°C. 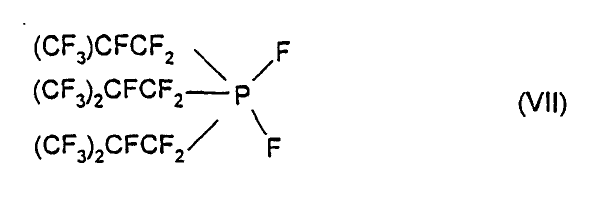 ³¹P-NMR, ppm: (CD₃COCD₃-Film mit 85 %ige H₃PO₄ als Standard),
-41,35 tsep.
J¹_{P,F} = 1086 Hz
J²_{P,F} = 125,0 Hz
¹⁹F-NMR, ppm: (CD₃COCD₃-Film mit CCl3^{F} als Standard),
-45,98 dm (2F, PF₂)
-74,07 m (18F, 6CF₃)
-99,20 dm (6F, 3CF₂)
-180,49 m (3F, 3CF)
J¹_{P,F} = 1087 Hz
J²_{P,F} = 124,9 Hz

In der Zelle wurden zunächst 1075 g flüssiger Fluorwasserstoff 138 Stunden vorelektrolysiert und dann insgesamt 499,0 g einer 42,9 %igen Tris(iso-butyl)phosphan-Lösung in Fluorwasserstoff in 5 Portionen, wie in der folgenden Tabelle dargestellt, zugefügt

| Menge Tris(iso-butyl)phosphan-Lösung [g] | Elektrolysedauer [Ah] |
|---|---|
| 104,0 | 0 |
| 96,0 | 315,2 |
| 102,0 | 699,9 |
| 99,0 | 983,6 |
| 98,0 | 1373,4 |

Die Elektrolyse erfolgte bei einer Zellspannung von 4,5 - 5,5 Volt und einer Stromdichte von 0,20 - 0,35 A/dm² und wurde nach Durchsatz von 2377,2 Ah (149,5 % der theoretisch notwendigen Menge) beendet. Von der eingesetzten Elektrizitätsmenge wurden etwa 9 % zur Trocknung des Fluorwasserstoff verwendet. Das flüssige Reaktionsprodukt, das sich aus der Fluorwasserstoff-Lösung abscheidet, wurde periodisch von Zellenboden abgezogen und das Volumen durch Zugabe von zusätzlichem Fluorwasserstoff (Gesamtmenge 690 g) konstant gehalten. Insgesamt wurden 440 g einer klaren Flüssigkeit isoliert, die nach Aussage der ¹⁹F- und ³¹P-NMR-Spektren ein Gemisch von Tris(nonatluoro-isobutyl)difluorophosphoran, Tris(nonafluorobutyl)difluorophosphoran, Nonafluorobutyl[bis(nonafluoro-iso-butyl)]difluorophosphorane ist. Die Ausbeute betrug 57,2 %. Dieses Gemisch enthält etwa 10 % der Isomere mit einem oder zwei Wasserstoffatomen. Durch fraktionierte Destillation in einer Teflon-Apparatur kann Tris(nonafluoro-isobutyl)difluorophosphoran als Hauptanteil isoliert werden.

## Patentansprüche

1. Verfahren zur Herstellung von Perfluoralkylfluorophosphoranen der allgemeinen Formel
(CₙF₂ₙ₊ₘ)_{y}PF_{5-y} (I)
worin
n 1, 2, 3, 4, 5, 6, 7 oder 8,
m +1 oder-1 und
y 1, 2 oder 3
bedeuten, wobei die Liganden (CₙF₂ₙ₊ₘ) gleich oder unterschiedlich sein können, **dadurch gekennzeichnet, daß** die elektrochemische Fluorierung von Alkylphosphanen mit gleichen oder unterschiedlichen, linearen, verzweigten oder cyclischen Alkylsubstituenten am Phosphor, in wasserfreiem HF, bei einer Zelltemperatur zwischen -15°C bis 40°C, bei einem Druck von 1 bis 3 bar, einer Zellspannung von 4,0 bis 6,5 V und einer Stromdichte von 0,1 bis 3,5 A/dm² durchgeführt wird.

2. Verfahren gemäß Anspruch 1, **dadurch gekennzeichnet, daß** die Fluorierung zwischen -10°C und 10°C durchgeführt wird.

3. Verfahren gemäß Anspruch 1, **dadurch gekennzeichnet, daß** die Fluorierung bei 0°C durchgeführt wird.

4. Verfahren gemäß Anspruch 1, **dadurch gekennzeichnet, daß** die Fluorierung bei einem Druck zwischen 1 bar und 0,5 bar durchgeführt wird.

5. Verfahren gemäß Anspruch 1, **dadurch gekennzeichnet, daß** die Fluorierung unter Normaldruck durchgeführt wird.

6. Verfahren gemäß Anspruch 1, **dadurch gekennzeichnet, daß** die Reaktion bei einer Stromdichte von 0,2 bis 0,6 A/dm² durchgeführt wird.

7. Verfahren gemäß Anspruch 1, **dadurch gekennzeichnet, daß** die Reaktion bei einer Stromdichte von 0,22 bis 0,55 A/dm² durchgeführt wird.

## Claims

1. Process for preparing perfluoroalkylfluorophosphoranes of the general formula
(CₙF₂ₙ₊ₘ)_{y}PF_{5-y} (I)
where
n is 1, 2, 3, 4, 5, 6, 7 or 8
m is +1 or -1 and
y is 1, 2 or 3,
where the ligands (CₙF₂ₙ₊ₘ) may be identical or different, **characterized in that** the electrochemical fluorination of alkylphosphanes with identical or different, linear, branched or cyclic alkyl substituents on the phosphorus is carried out in anhydrous HF at a cell temperature of from -15°C to 40°C at a pressure of from 1 to 3 bar, at a cell voltage of from 4.0 to 6.5 V and at a current density of from 0.1 to 3.5 A/dm².

2. Process according to Claim 1, **characterized in that** the fluorination is carried out at from -10°C to 10°C.

3. Process according to Claim 1, **characterized in that** the fluorination is carried out at 0°C.

4. Process according to Claim 1, **characterized in that** the fluorination is carried out at a pressure of from 1 to 0.5 bar.

5. Process according to Claim 1, **characterized in that** the fluorination is carried out at atmospheric pressure.

6. Process according to Claim 1, **characterized in that** the reaction is carried out at a current density of from 0.2 to 0.6 A/dm².

7. Process according to Claim 1, **characterized in that** the reaction is carried out at a current density of from 0.22 to 0.55 A/dm².

## Revendications

1. Procédé pour la préparation de perfluoroalkylfluorophosphoranes de formule générale :
(CₙF₂ₙ₊ₘ)_{y}PF_{5-y} (I)
où
n est égal à 1, 2, 3, 4, 5, 6, 7 ou 8,
m à +1 ou -1 et
y à 1, 2 ou 3,
les ligands (CₙF₂ₙ₊ₘ) pouvant être identiques ou différents, **caractérisé en ce que** l'on effectue la fluoration électrochimique des alkylphosphoranes comportant sur le phosphore des substituants alkyles identiques ou différents, linéaires, ramifiés ou cycliques, dans du HF anhydre, à une température de la cellule comprise entre -15°C et 40°C, sous une pression comprise entre 1 et 3 bars, sous une tension de la cellule comprise entre 4,0 et 6,5 V et avec une densité de courant comprise entre 0,1 et 3,5 A/dm².

2. Procédé selon la revendication 1, **caractérisé en ce que** la fluoration est effectuée à une température comprise entre -10°C et 10°C.

3. Procédé selon la revendication 1, **caractérisé en ce que** la fluoration est effectuée à 0°C.

4. Procédé selon la revendication 1, **caractérisé en ce que** la fluoration est effectuée sous une pression comprise entre 1 bar et 0,5 bar.

5. Procédé selon la revendication 1, **caractérisé en ce que** la fluoration est effectuée à la pression normale.

6. Procédé selon la revendication 1, **caractérisé en ce que** la réaction s'effectue avec une densité de courant comprise entre 0,2 et 0,6 A/dm².

7. Procédé selon la revendication 1, **caractérisé en ce que** la réaction s'effectue avec une densité de courant comprise entre 0,22 et 0,55 A/dm².
